# EUROPEAN PATENT APPLICATION

(11) **EP 4 235 973 A1**
(43) Date of publication of application: **30.08.2023**
(21) Application number: 23170942.9
(22) Date of filing: 20.12.2021
(51) Int. Cl.: H01R 4/30, H01R 4/32, H01R 13/44, F16B 37/06

(54) **BUS BAR CONTACT FOR ATTACHMENT TO A BUS BAR, AND METHOD FOR ATTACHING A BUS BAR CONTACT**

(30) Priority: 18.12.2020 DE 102020134255
(62) Divisional of application: 21216107.9
(71) Applicant: TE Connectivity Germany GmbH, 64625 Bensheim (DE)
(72) Inventor: BUECHLING, Chris, 64625 Bensheim (DE); KAEHNY, Frank, 64625 Bensheim (DE); EHEIM, Manuel, 64625 Bensheim (DE); WOLF, Marcus, 64625 Bensheim (DE); HOFFMANN, Bjoern, 64625 Bensheim (DE); WEBER, Alexander, 64625 Bensheim (DE); DISTLER, Patrick, 64625 Bensheim (DE)
(74) Representative: Grünecker Patent- und Rechtsanwälte PartG mbB

(57) **Abstract**

The invention relates to a bus bar contact (100) for attachment to a bus bar (50), comprising a contact ring (10) with a contact surface (12) disposed at a distal end (19) for establishing electrical contact, and a fastening element (20) for mechanical fastening. The contact ring (10) can comprise a radially projecting press-in flange (16) with a cylindrical contact surface (13) pointing radially outwardly. Furthermore, the fastening element (20) and the contact ring (10) can comprise complementary press-on surfaces (15, 25) that taper in a direction opposite to a direction of connection (V). Moreover, methods of inserting a bus bar contact (100) into a bus bar (50) are shown.

## Description

The invention relates to a busbar contact for the attachment to a busbar, comprising a contact ring with a contact surface disposed at a distal end for establishing electrical contact and a fastening element for mechanical fastening.

The invention further relates to a method for fastening a busbar contact to a busbar.

Busbars are used to transmit currents, in particular high currents, with low resistance They can be used, for example, in electrically powered vehicles to transmit the electrical power. However, previous systems are complex to manufacture and assemble and/or may exhibit high contact resistance at connection points.

The object of the invention is to provide a solution that enables simple manufacture and good current transmission.

According to the invention, this is achieved in that the contact ring comprises a radially projecting press-in flange with a cylindrical contact surface pointing radially outwardly. The press-in flange can be pressed into the busbar. Due to the cylindrical contact surface pointing radially outwardly and the non-stepped contact ring diameter, which are both configured exactly to the busbar, a radial current flow can take place with a good cross section and large contact force and therefore low resistance.

In a corresponding method, the press-in flange is introduced into a hole in the busbar and an edge of the hole is subsequently reduced in size by deformation. This allows the contact ring to be secured and the contact force to be increased.

Furthermore, the object is satisfied where the fastening element and the contact ring comprise complementary press-on surfaces which taper in a direction opposite to a direction of connection. Such a configuration enables an automatic pressing operation and thereby a large contact force. As a result, the resistance is low there as well.

In a corresponding method, the fastening element is inserted into the contact ring, the fastening element is inserted through a hole in the busbar and, by fastening a counter element to the fastening element, the busbar is subsequently clamped between the counter element and the contact ring.

The solution according to the invention can be further improved by the following further developments and configurations which are advantageous in themselves and which can be combined with one another as desired.

The busbar contact can be configured to contact a mating contact. In particular, the contact surface disposed at the distal end can be configured to establish electrical contact with the mating contact. For example, it can be configured as a circular ring for contacting a likewise circular ringshaped mating contact surface.

In an advantageous embodiment, the press-in flange can have a rectangular radial cross section. As a result, a good flow of current can be obtained while at the same time achieving high stability.

For easy accessibility, the cylindrical contact surface can be disposed on an outer side.

The cylindrical contact surface can be perpendicular to a front surface and/or a rear surface of the press-in flange in order to attain simple manufacture. Furthermore, this can improve the positioning of the busbar contact in the busbar.

In order to hold the contact ring well in the busbar, an outer diameter in the region of the press-in flange can be at least 5%, preferably 10%, specifically 20% larger than the remainder of the contact ring. A value of max. 100%, preferably 50%, can be regarded as the upper limit in order to still obtain sufficient stability in the mechanical fastening and sufficient ampacity.

In an advantageous embodiment, the fastening element comprises a press-on flange which is configured to press the contact ring toward a mating contact. This can enable a stable mechanical connection. The press-on flange can project radially from the remainder of the fastening element. It can be configured to press the contact surface at the distal end toward the mating element. It can then itself be arranged at a proximal end of the fastening element.

The press-on flange is preferably in part complementary to the press-in flange in order to allow for good force transmission. In the assembled state, the press-on flange and the press-in flange can abut against one another.

In an advantageous embodiment, the press-in flange can project radially beyond the press-on flange. It is then possible to plastically deform an edge of the hole in the busbar in order to better contact and/or hold the press-in flange. The press-in flange can project further radially or laterally than the press-on flange. The press-in flange can be wider than the press-on flange, i.e. can have a larger outer diameter.

A length of the contact ring can be at least 40%, preferably at least 50%, specifically at least 60% of the length of the fastening element in order to achieve good mechanical stability. The length can there be measured along the axial direction. A value of 150% can be regarded as being the upper limit.

The conical press-on surface on the fastening element can taper from a distal end to a proximal end. This can automatically generate a force toward the busbar when the fastening element is fastened.

In a further advantageous embodiment, the busbar contact comprises a counter element for connecting to the fastening element. The fastening element and the counter element can have complementary connecting sections in order to ensure simple fastening to one another. This can be, for example, a screw thread. For example, there can be an external thread present on the fastening element and a corresponding internal thread on the counter element. Other fastening mechanisms are also possible, for example, in the manner of a bayonet or by way of a catch connection.

In the assembled state, the busbar can be clamped between the contact ring and the counter element. It is held securely in his way. The clamping force for this can be generated by the connection between the counter element and the fastening element and transmitted through the conical press-on surfaces with a low surface pressure. For this purpose, the conical press-on surfaces preferably have as large a surface as possible and can extend along the entire length of the contact ring.

In order to prevent a rotation in the fastened state, the counter element can have a radially projecting flange, where toothed elements project from a front side of the flange.

For being held together at least temporarily, for example, during a pre-assembly step, the fastening element and/or the contact ring can comprise at least one clamping projection for clamping to the respective other element.

The clamping projection can be located adjacent to the press-on flange. This can have the advantage that the clamping achieved in this way only takes place in the last section of the assembly of the two elements.

The clamping projection can be configured as a clamping strip in order to have a large active surface. The clamping projection can have a uniform cross section along an axial direction so that the contact ring can simply be pushed onto the fastening element along the axial direction.

In the assembled state, a clamping projection can be disposed within the press-in flange. As a result, deformation of the fastening element caused by the clamping projection can be minimized and a clamping force can be large.

For easy assembly, the fastening element can comprise a screw thread for screwing to the mating element. The screw thread is preferably an internal thread in order to be able to fasten it to a standardized screw with a corresponding external thread.

In an advantageous embodiment, the contact ring comprises a receiving channel for the fastening element. The receiving channel can guide and hold the fastening element.

In the assembled state, the fastening element can penetrate the contact ring. The fastening element can protrude through the receiving channel.

In a preferred configuration, the contact ring is made of material that has good electrical conductivity. By way of example, the material can comprise copper. Such material does not necessarily have to have high mechanical stability.

In a further preferred configuration, the fastening element is made of mechanically stable material. It can comprise, for example, steel. The electrical resistance of this material can be lower than that of the material for the contact ring.

To protect operators, the busbar contact can comprise a touch guard cap which is configured to be attached to a distal end of the fastening element. This can prevent contact with voltage or current-carrying components.

The touch guard cap can be wider than an inner diameter of the receiving channel of the contact ring. In the mounted state, the touch guard cap can then automatically secure the contact ring against unintentional separation from the fastening element.

In an advantageous configuration, a tongue and groove system is present between the fastening element and the touch guard cap for fastening the two to each other.

The busbar can be a conductor rail.

The invention also relates to an assembly comprising a busbar and a busbar contact fitted in a hole in the busbar.

The hole can be adapted to the busbar contact. It can be complementary to the busbar contact, at least in sections. In particular, the hole can be cylindrical in sections. The hole can be created by drilling.

In an advantageous embodiment, the hole has a stepped bore. The busbar contact can be inserted or pressed into such a stepped bore, which has two different diameters, until the press-in flange abuts against the step. This allows for automatic correct positioning along the depth in the busbar.

After insertion, an edge of the hole can be pressed in. For example, a tool can be used to plastically deform material at the edge of the hole toward the center, for example, peen it. This allows the busbar contact to be secured. Conventional devices or devices specifically modified for the process can be used for deformation. With such deformation, ultrasound can also be used for improvement. A tool in such a device can abut against the edge of the hole during the plastic deformation step. A tool can be configured, for example, as a ram or a pin.

In an advantageous configuration, the edge can be pressed in throughout, e.g. along 360 degrees around the hole.

In alternative configurations, the hole in the busbar can be no stepped hole, but rather have a diameter that is uniform along the depth. In such a configuration, the busbar contact can be temporarily held in the correct position, for example, by an operator or a machine or by frictional engagement in the hole. In a subsequent step, the edges on both sides of the hole can then be deformed in order to hold the busbar contact permanently in the hole.

The invention shall be explained in more detail hereafter by way of example on the basis of advantageous configurations with reference to the drawings. The advantageous further developments and configurations shown there are each independent of one another and can be combined with one another at random, depending on how this is necessary in the application.
- Fig. 1: shows a schematic exploded representation of a first embodiment of a busbar contact;
- Fig. 2: shows a schematic sectional representation of the busbar contact from Figure 1 in the assembled state;
- Fig. 3: shows a schematic perspective view of the busbar contact from Figures 1 and 2 when being inserted into a busbar;
- Fig. 4: shows a schematic sectional representation of the busbar contact from Figures 1 to 3 inserted into the busbar;
- Fig. 5: shows a schematic sectional representation of the busbar contact from Figures 1 to 4, where an edge of the hole in the busbar is deformed;
- Fig. 6: shows a schematic sectional representation of the busbar contact from Figures 1 to 2 inserted into the busbar that is configured differently;
- Fig. 7: shows a schematic partially sectioned perspective view of a further embodiment of a busbar contact mounted on a busbar;
- Fig. 8: shows a schematic sectional view of the busbar contact from Figure 7;
- Fig. 9: shows a schematic partially sectioned perspective view of the busbar contact from Figures 7 and 8 when being inserted into a busbar.

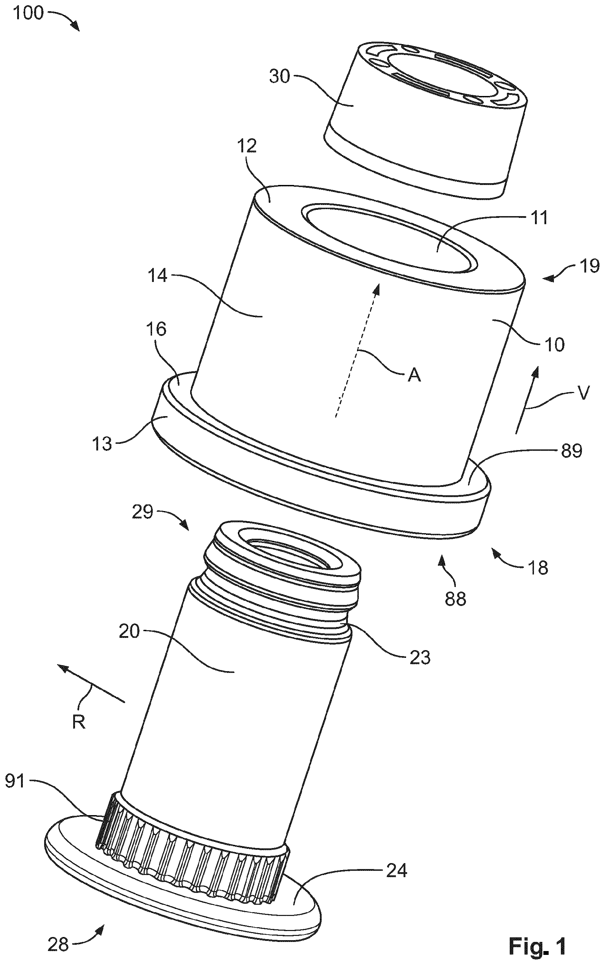

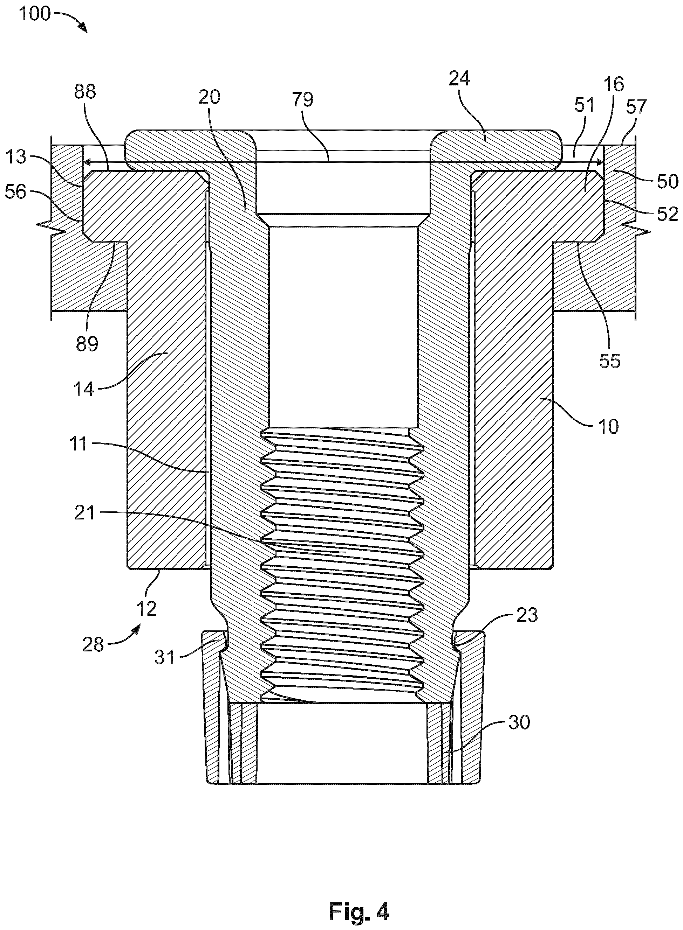

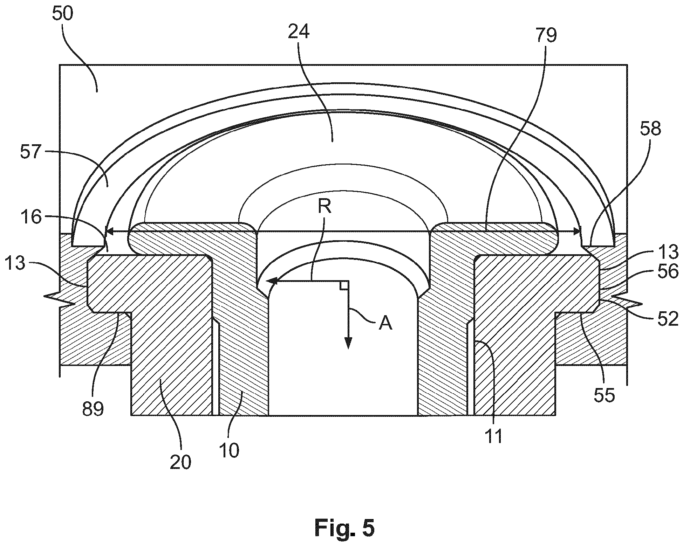

A first embodiment of a busbar contact 100 is shown in Figures 1 to 6. It is used to establish a secure electrical connection between a busbar 50 and a mating element (not shown in more detail). Busbar 50 can be, for example, part of an electric drive in a vehicle. For this purpose, it may be necessary to be able to transmit high currents and/or voltages. Busbar contact 100 is therefore to enable low contact resistance to busbar 50.

In order to achieve this, busbar contact 100 comprises a contact ring 10 which is preferably made of material having good electrical conductivity, for example, copper, and thereby enables good conductivity.

Contact ring 10 comprises a contact surface 12 at a distal end 19 for establishing contact with the mating element. In the example shown, contact surface 12 has the shape of a circular ring and runs perpendicular to a direction of connection V along which busbar contact 100 is connected to the mating element. Contact surface 12 disposed at distal end 19 is disposed on a front surface of a tubular section 14 of contact ring 10.

A press-in flange 16 is present at a proximal end 18 of contact ring 10, which in the assembled state is associated with busbar 50. Press-in flange 16 projects radially from the remainder of contact ring 10. Press-in flange 16 therefore projects beyond tubular section 14, i.e. in a radial direction R which runs perpendicular to an axial direction A. Press-in flange 16 projects about axial direction A along the entire circumference from tubular section 14. It extends throughout along the entire circumference of contact ring 10.

Press-in flange 16 has a cylindrical contact surface 13 pointing radially outwardly. This contact surface 13 establishes a good electrical connection to busbar 50 in the inserted or pressed-in state. Contact surface 13 is at each point perpendicular to radial direction R and parallel to axial direction A. Press-in flange 16 further comprises a front surface 89 and a rear surface 88 parallel thereto which each extend perpendicular to axial direction A and to contact surface 13. Press-in flange 16 consequently has a substantially rectangular cross section when the cross-sectional plane comprises axial direction A and radial direction R.

Cylindrical contact surface 13 is disposed on an outer side of contact ring 10 and represents the outermost surface of contact ring 10 in radial direction R.

In the region of press-in flange 16, the outer diameter of contact ring 10 is significantly larger than that of tubular section 14. It can be, for example, 5, 10 or 20 percent larger than at the remainder of contact ring 10. In order not to let conductive tubular section 14 become too small and still be able to transmit sufficient currents, a value of 50 percent can be the maximum to be considered.

In the example shown, outer diameter 76 of press-in flange 16 is approximately 25 percent larger than outer diameter 74 of tubular section 14. Outer diameters 74, 76 are each measured along radial direction R.

In order to be able to fasten busbar contact 100 mechanically well to mating element, the former comprises a fastening element 20. Fastening element 20 is made of mechanically stable material, for example, steel. Fastening element 20 is configured such that it presses contact ring 10 along direction of connection V toward the mating element. This creates a good electrically conductive connection between contact surface 12 on distal end 19 and a corresponding mating contact surface on the mating element. The mating element, for example, can likewise comprise a contact ring.

Fastening element 20 comprises a press-on flange 24 which projects radially from a proximal end 28 of fastening element 20. An outer diameter 78 of press-in flange 24 is smaller than outer diameter 76 of press-in flange 16 in order to be able to deform an edge 57 of a hole 51 in busbar 50 such that it engages behind contact ring 10 after busbar contact 100 has been inserted into busbar 50. In the example shown, outer diameter 78 of press-in flange 24 corresponds approximately to outer diameter 74 of tubular section 14 for enabling good force transmission along axial direction A.

Press-on flange 24 and press-in flange 16 in the region in which they abut against one another in the assembled state are configured to be approximately complementary in order to allow for good force transmission. In the example shown, the respective surfaces are each planar and perpendicular to direction of connection V.

In the assembled state, fastening element 20 penetrates contact ring 10. Fastening element 20 is then received in a receiving channel 11 which extends along axial direction A.

A length 81 of contact ring 10 measured along axial direction A corresponds to approximately 70 percent of length 72 of fastening element 20, which is also measured in axial direction A. This results in a good mechanical connection.

Fastening element 20 has clamping projections 91 located adjacent to press-on flange 24 which serve to clamp fastening element 20 to contact ring 10 at least temporarily. Clamping projections 91 are configured as clamping strips which extend away from press-on flange 24 along direction of connection V. They are distributed uniformly along a circumference on fastening element 20. In the assembled state, clamping projections 91 are disposed within press-in flange 16. As a result, the clamping force can be high without causing deformation.

In order to be able to securely fasten fastening element 20 to the mating element, it comprises a screw thread in the form of an internal thread 21 Internal thread 21 is located at a proximal end 29 of fastening element 20 and extends approximately up to midway of fastening element 20 along direction of connection V.

Busbar contact 100 also comprises a touch guard cap 30 made of an electrically insulating material. A spring 31 in the form of an inwardly protruding collar on touch guard cap 30 engages in a corresponding circumferential groove 23 on distal end 29 of fastening element 20 for securing touch guard cap 30. In order to further prevent contact ring 10 from falling off fastening element 20, an outer diameter 73 of touch guard cap 30 is somewhat larger than an inner diameter, i.e. an inner clear width 71 of receiving channel 11 of contact ring 10.

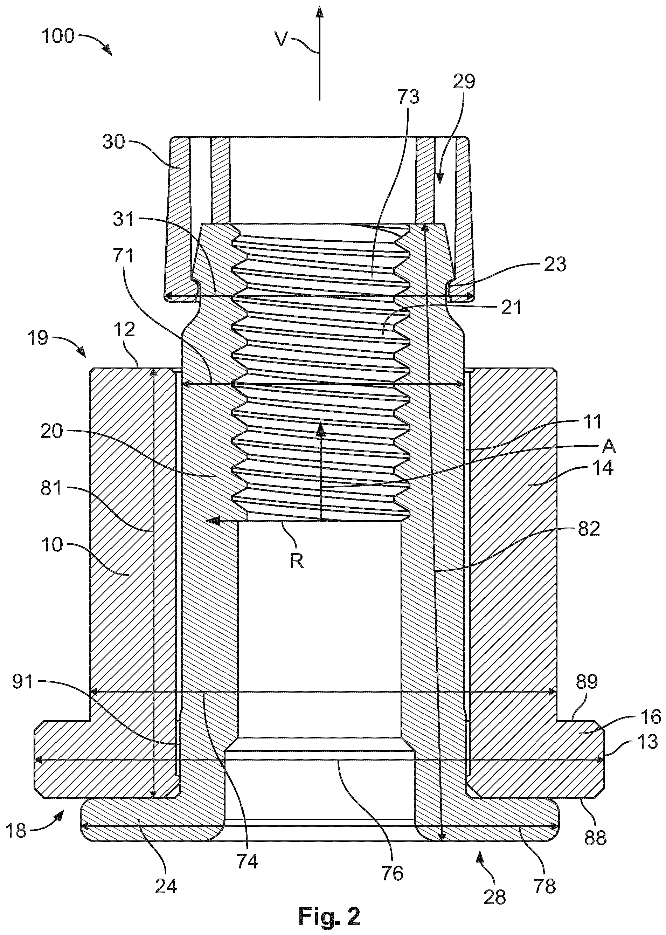

Various steps of a method are shown in Figures 2, 3, 4 and 5.

Once fastening element 20 has been inserted into contact ring 10 and touch protection cap 30 has optionally been attached, busbar contact 100 thus established is inserted along a direction of insertion E into a hole 51 in busbar 50. Direction of insertion E there runs parallel to direction of connection V, along which busbar contact 100 is later connected to the mating element. Press-in flange 16 is there pressed into hole 51 which, at least in the upper section, has a diameter which corresponds approximately to outer diameter 76 or is slightly smaller. Pressing in establishes a good mechanical and electrical contact, in particular in the region of contact surface 13, which in the assembled state abuts against a mating pressing surface 56 in the hole.

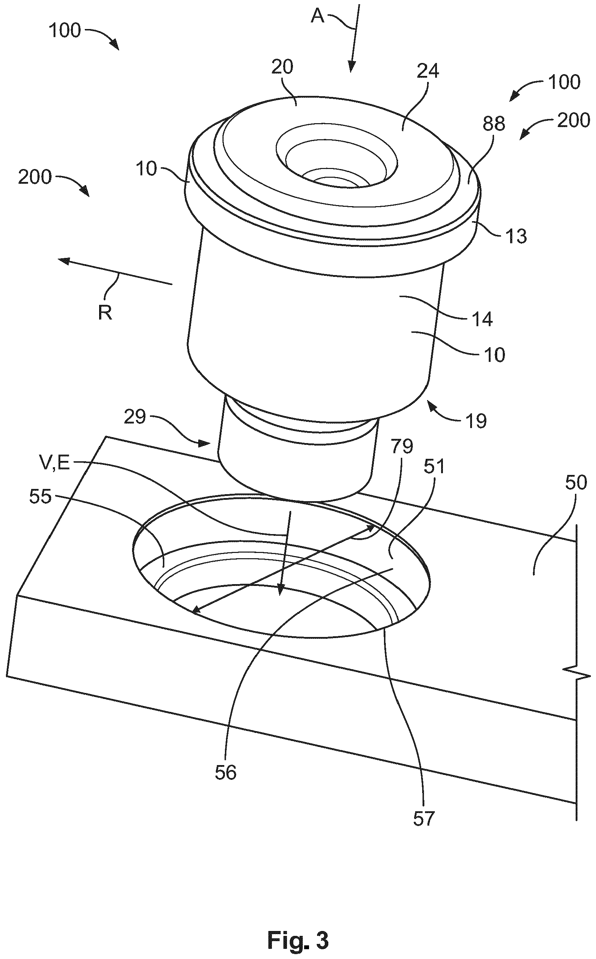

In the example shown in Figures 3, 4 and 5, hole 51 in busbar 50 is a stepped hole 52 which has two different inner diameters along direction of insertion E. This causes automatic positioning of busbar contact 100, since it can only be inserted until it strikes a stepped surface 55. In this position, rear surface 88 is automatically correctly positioned. An edge 57 of hole 51 can then be deformed onto rear surface 88 such that a bead 58 thus formed engages behind and thereby secures contact ring 10 in the region of press-in flange 16. Edge 57 can be reshaped or deformed, for example, by peening. As a result of the deformation, an inner diameter of hole 51 is reduced at least in the region of edge 57. In particular, an opening diameter of hole 57 is reduced by the deformation.

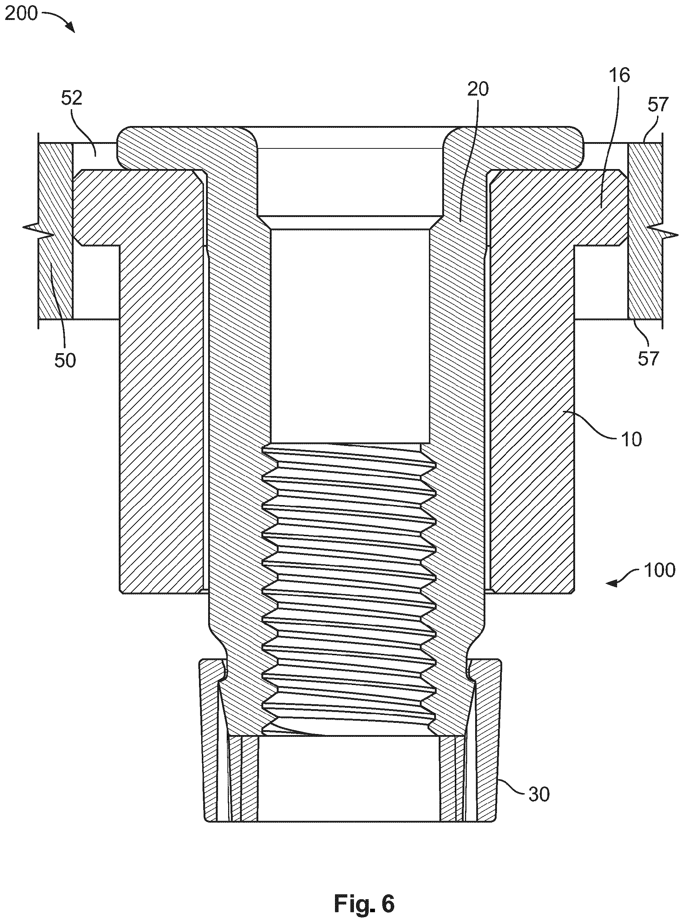

Figure 6 shows a further configuration of an assembly 200 comprising a busbar contact 100 and a busbar 50. Busbar contact 100 in this example corresponds to that from Figures 1 to 5. Busbar 50, however, is configured differently. Instead of a stepped hole 52, a hole 51 with a uniform inner diameter is provided there. In such a configuration, edges 57 on both sides of hole 51 are deformed after busbar contact 100 has been pressed in or inserted. Busbar contact 100 is thereby held on both sides by a respective bead 58. Such a design can be easier to manufacture.

One advantage of the configuration according to Figures 1 to 6 can be seen in particular in the fact that contact surface 13, through which a large portion of the current flows, is disposed outside a force flow for the mechanical fastening. As a result, the electrical connection between contact ring 10 and busbar 50 on contact surface 13 is largely independent of the connecting force between fastening element 20 and the mating element.

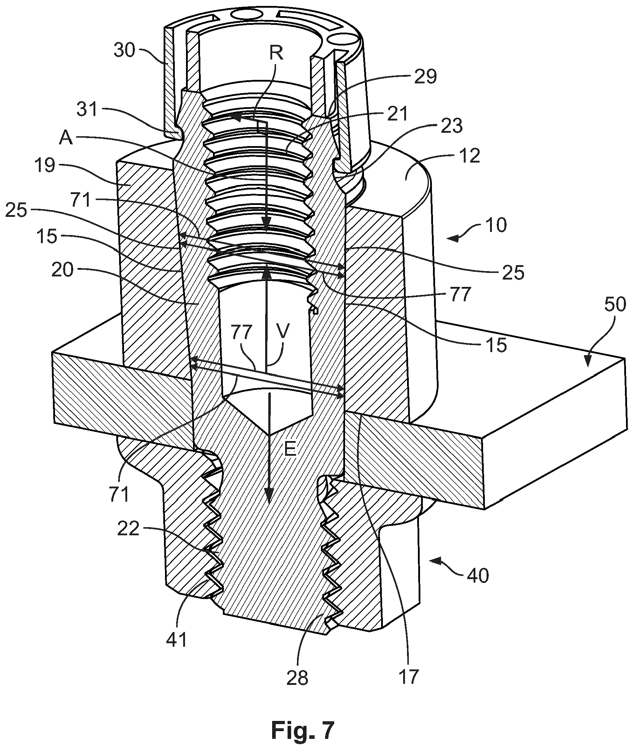

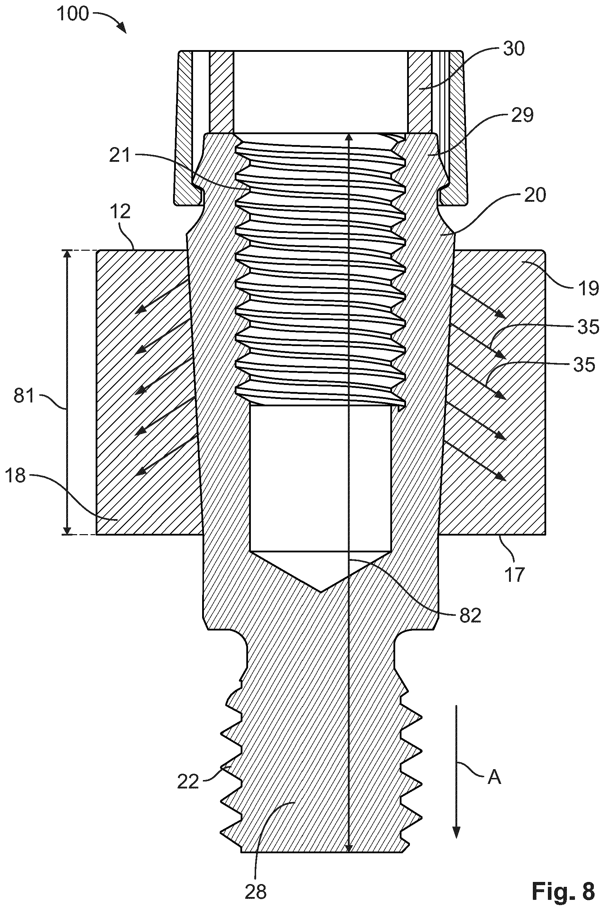

A further embodiment of a busbar contact 100 is shown in Figures 7 to 9. In many parts it corresponds to the embodiment of Figures 1 to 6. The following therefore mainly pertains to the differences.

Busbar contact 100 again comprises a contact ring 10 which comprises a contact surface 12 at a distal end 19 for contacting a mating element. Contact ring 10 is again made of material with good electrical conductivity, for example, copper, and in the assembled state is in electrical contact with busbar 50 on a rear contact surface 17. No connection in a positive substance-fit manner needs to be present at the connection point, as would be created, for example, by soldering or welding.

For mechanical fastening to the mating element, busbar contact 100 again comprises a fastening element 20 made of mechanically stable material, such as steel. Fastening element 20 extends in a receiving channel 11 through contact ring 12 and through hole 51 in busbar 50. To secure busbar contact 100 to busbar 50, a counter element 40 is provided on the other side of busbar 50 and with its internal thread 41 engages in an external thread 22 of fastening element 20. By rotating counter element 40 relative to fastening element 20, fastening element 20 can be drawn toward counter element 40. Due to conical contact surfaces 15, 25 on contact ring 10 or on fastening element 20, respectively, good mechanical contact between contact ring 10 and fastening element 20 is established automatically having a large contact force 35 and a sufficiently low surface pressure not to deform contact ring 10. Furthermore, contact ring 10 is automatically pressed against busbar 50 so that a large contact force also acts in the region of rear contact surface 17.

Contact surfaces 15, 25 extend over approximately 50 percent of length 82 of fastening element 20 and over entire length 81 of contact ring 10, where length 81, 82 are each measured along direction of connection V.

In the region of contact surfaces 25, fastening element 20 tapers in a direction opposite to direction of connection V, i.e. from a distal end 28 to a proximal end 29. An outer diameter 77 of fastening element 20 and an inner clear width 71 of receiving channel 11 reduce in a direction opposite to direction of connection V.

Press-on surfaces 15 of contact ring 10 are complementary to press-on surfaces 25 of fastening element 25. In particular, an opening angle of the cone of press-on surfaces 15, 25 is equal so that they can lie on one another in a planar manner.

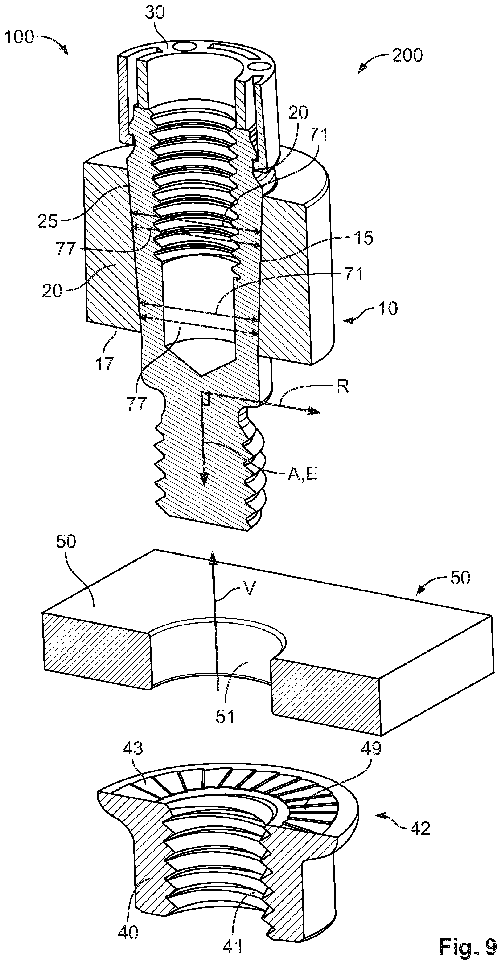

A step of a method is shown in Figure 9. Once fastening element 20 has been inserted into the contact ring, it is inserted into busbar 50 in the step shown along a direction of insertion E which in this case runs in a direction opposite to direction of connection V. A part of fastening element 20 is inserted through hole 51 and thereafter protrudes on the other side of busbar 50. There it is connected to counter element 40 by a screwing motion. As a result, busbar 50 is clamped between counter element 40 and contact ring 10.

In order to prevent counter element 40 from rotating relative to busbar 50, there is a radially projecting flange 42 present on counter element 40, on front side 49 of which toothed elements 43 project in the direction toward busbar 50. In the embodiment shown, a plurality of toothed elements 43 is present and is distributed uniformly along the circumference. Toothed elements 43 can also act only along a direction of rotation, for example, a direction opposite to the direction of rotation with which fastening element 20 and counter element 40 are fastened to one another. This can prevent the connection from disengaging or make this more difficult. This can be done, for example, by way of ramp-shaped or wedge-shaped toothed elements 43.

Busbar contact 100 again comprises a touch guard cap 30 which is secured by a tongue 31 which engages in a groove 23 on distal end 29 of fastening element 20. Touch guard cap 30 again prevents a user from accessing live parts.

Assembly 200 can furthermore comprise further touch guard elements which are arranged, for example, around contact ring 10 and/or around busbar 50, for example, as an end-to-end covering made of electrically insulating material.

Unlike in the embodiment from Figures 1 to 6, fastening element 20 comprises an external thread 22 at its proximal end 28 in order to be able to keep hole 51 in busbar 50 as small as possible.

### Reference characters

- 10: contact ring
- 11: receiving channel
- 12: contact surface
- 13: contact surface
- 14: tubular section
- 15: press-on surface
- 16: press-in flange
- 17: contact surface
- 18: proximal end
- 19: distal end
- 20: fastening element
- 21: internal thread
- 22: external thread
- 23: groove
- 24: press-on flange
- 25: press-on surface
- 28: proximal end
- 29: distal end
- 30: touch guard cap
- 31: spring
- 35: contact force
- 40: counter element
- 41: internal thread
- 42: flange
- 43: toothed element
- 49: front side
- 50: bus bar
- 51: hole
- 52: stepped hole
- 55: step surface
- 56: mating pressing surface
- 57: edge
- 58: bead
- 71: inner clear width of the receiving channel
- 73: outer diameter of the touch guard cap
- 74: outer diameter of the tubular section
- 76: outer diameter of the press-in flange
- 77: outer diameter of the fastening element
- 78: outer diameter of the press-on flange
- 79: inner diameter of the hole
- 81: length of the contact ring
- 82: length of the fastening element
- 88: rear surface
- 89: front surface
- 91: clamping projection
- 100: busbar contact
- 200: assembly
- E: direction of insertion
- A: axial direction
- R: radial direction
- V: direction of connection

## Claims

1. Bus bar contact (100) for attachment to a bus bar (50), comprising a contact (10) with a contact surface (12) disposed at a distal end (19) for establishing electrical contact, and a fastening element (20) for mechanical fastening, where said fastening element (20) and said contact ring (10) comprise complementary press-on surfaces (15, 25) that taper in a direction opposite to a direction of connection (V).

2. Busbar contact (100) according to claim 1, where said busbar contact (100) comprises a counter element (40) for connecting to said fastening element (20).

3. Busbar contact (100) according to claim 2, where said counter element (40) comprises a radially projecting flange (42), where toothed elements (43) project from a front side (49) of said flange (42).

4. Busbar contact (100) according to one of the claims 1 to 3, where said fastening element (20) comprises a screw thread for screwing to said mating element.

5. Busbar contact (100) according to one of the claims 1 to 4, where said contact ring (10) comprises a receiving channel (11) for said fastening element (20).

6. Busbar contact (100) according to one of the claims 1 to 5, where said busbar contact (100) comprises a touch guard cap (30) which is configured to be attached to a distal end (29) of said fastening element (20).

7. Bus bar contact (100) for attachment to a bus bar (50), comprising a contact (10) with a contact surface (12) disposed at a distal end (19) for establishing electrical contact, and a fastening element (20) for mechanical fastening, where said contact ring (10) comprises a radially projecting press-in flange (16) with a cylindrical contact surface (13) pointing radially outwardly.

8. Busbar contact (100) according to claim 7, where said press-in flange (16) has a rectangular radial cross section.

9. Busbar contact (100) according to claim 7 or 8, where said fastening element (20) comprises a press-on flange (24) which is configured to press said contact ring (10) toward a mating contact.

10. Busbar contact (100) according to one of the claims 1 to 9, where said fastening element (20) and/or said contact ring 10 comprise at least one clamping projection (91) for clamping to the respective other element (10, 20).

11. Assembly (200) comprising a busbar (50) and a busbar contact (100) fitted in a hole (51) in said busbar (50) according to one of the claims 1 to 10.

12. Assembly (200) according to claim 11, where said hole (51) comprises a stepped bore.

13. Assembly (200) according to claim 11 or 12, where the edge (57) of said hole (51) is pressed in.

14. Method for fastening a busbar contact (100) according to one of the claims 1 to 3 or 5 to 10 on a busbar (50), where said press-in flange (16) is introduced into a hole (51) in said busbar (50) and an edge (57) of said hole (51) is subsequently reduced in size by deformation.

15. Method for fastening a busbar contact (100) according to one of the claims 1 to 10 on a busbar (50), where said fastening element (20) is inserted into said contact ring (10), said fastening element (20) is inserted through a hole (51) in said busbar (50) and, by fastening a counter element (40) to said fastening element (20), said busbar (50) is subsequently clamped between said counter element (40) and said contact ring (10).
